# EUROPEAN PATENT APPLICATION

(11) **EP 2 034 669 A1**
(43) Date of publication of application: **11.03.2009**
(21) Application number: 07022236.9
(22) Date of filing: 15.11.2007
(51) Int. Cl.: H04L 12/56

(54) **Method for determining the distance between a route and a node of a possible parallel route for data transmission**

(30) Priority: 06.09.2007 EP 07017486
(71) Applicant: SIEMENS AKTIENGESELLSCHAFT, 80333 München (DE)
(72) Inventor: Hollick, Matthias, 64289 Darmstadt (DE); Mogre, Parag Sudhir, 64283 Darmstadt (DE); Schwingenschlögl, Christian, Dr., 85640 Putzbrunn (DE); Ziller, Andreas, 81827 München (DE)

(57) **Abstract**

The invention describes a method for determining the distance between a route and a node of a possible parallel route (1) for data transmission in a wireless mesh network (NW). The invention comprises a number of nodes (N), each of the two parallel routes starting from a source node and ending at a destination node and having a number of respective intermediate nodes (A, B) between the source node and the destination node. Each node of the mesh network (NW) propagates information about routes (1, 2) which go over this respective node. Each node (N) of the mesh network propagates disjoint information about routes which go over neighbourhood nodes being located in a maximum distance of k hops in relation to this respective node. The propagated information of each node (N) is transmitted as payload in an information element in a network control message to his neighbourhood nodes for determining the distance of the node to the route.

## Description

The invention relates to a method for determining the distance between a route and a node of a possible parallel route for data transmission in a wireless mesh network with a number of nodes. Each of the two parallel routes starts from a source node and ends at a destination node. Each of the two parallel routes comprises a number of respective intermediate nodes between the source node and the destination node. The invention further relates to a node in a wireless mesh network. Furthermore, the invention relates to a computer program product.

In wireless mesh networks or ad-hoc networks routing has to deal with the specific characteristics of the wireless medium. All bandwidth in a data transmission channel is shared between the nodes within. A strong transmitter (i.e. a sending node) can acquire the whole bandwidth in a channel so that the communication of other nodes is impossible, even if they are multiple hops apart. Hence, service degradation can be the result. In order to deal with sudden service degradation on one route a so-called multipath routing has been introduced where multiple parallel routes are set up. However, in order to completely avoid the above mentioned kind of interference, a routing scheme must be able to set up parallel routes which are independent from each other. This is called "correlation free". This means that the reason for service degradation, e.g. a sender allocating all available bandwidth, on one route must not be the reason for service degradation on another parallel route. This implies that the distance between the two parallel routes must be sufficiently.

However, this claim is not realized satisfactorily by known reactive routing schemes. There are routing schemes which are able to consider the distance of two parallel routes. Those methods are able to guarantee node-disjoint routes or at most routes which distance is one hop in-between two intermediate nodes of the parallel routes. These routing schemes are not sufficient with regard to the requirements stated above.

Finding minimal correlated routes in a network for multipath routing normally is addressed within the routing method itself, e.g. by overhearing of protocol messages. Known methods, e.g. in [AODVM], are able to realize node-disjoint paths. Another method described in [AODVM/PD] is able to find routes which are at most two hops apart.

It is therefore an object of the present invention to provide a method for determining the distance between a route and a node of a possible parallel route for data transmission in a wireless mesh network, wherein the two parallel routes better comply with the need for being correlation free or nearly correlation free. It is a further object of the present invention to provide a node in a wireless mesh network which facilitates executing the method according to the invention. Furthermore, it is an object of the invention to provide a wireless mesh network enabling and assisting to determine two parallel routes for data transmission being disjoint from each other.

These objects are solved with a method according to claim 1, a computer program product according to claim 15, a node in a wireless mesh network according to claim 16, and a wireless mesh network according to claim 18. Preferred embodiments are set out in the dependent claims.

In a method for determining the distance between a route and a node of a possible parallel route for data transmission in a wireless mesh network with a number of nodes, each of the two parallel routes starting from a source node and ending at a destination node and having a number of respective disjoint intermediate nodes between the source node and the destination node, each node of the mesh network propagates information about routes which go over this respective node, wherein each node of the mesh network propagates information about routes which go over neighbourhood nodes being located in a maximum distance of k hops in relation to this respective node, and wherein the propagated information of each node is transmitted as payload in an information element in a network control message (e.g. MSH-NCFG message according to IEEE standard 802.16-2004) to this neighbourhood nodes for determining the distance of the node to the route.

This method provides an efficient scheme for the notification of routes in the neighbourhood. The method according to the invention may be integrated in a MAC protocol of 802.16 mesh networks, which is, for example, required by QSRM(Quality of Service Oriented Routing with Multipath) for the determination of minimal distance parallel routes. One advantage of the invention is providing an information scheme to communicate the status of parallel routes on intermediate nodes. It thereby is possible to set up parallel routes which are correlation free. Correlation free means that the two parallel routes are completely independent from each other so that a possible reason for a service degradation of one of the two routes is not the reason for service degradation on the other of the two routes. Furthermore, the exact knowledge of routes in the network simplifies the establishment of correlation free parallel routes. This allows better network performance in terms of throughput, delay and reliability. By exchanging the hereto necessary information in an information element in a network control message, the method can be realized without any increase in network load. In other words, the method according to the invention utilizes unused resources since the amount of bandwidth available for the information element is independent of its size.

According to a preferred embodiment of the invention, a correlation factor of two parallel routes is calculated. By analyzing a correlation factor of the two parallel routes, it is possible to determine whether they are correlation free or not. In the latter case it might be possible to analyse a further set of parallel routes to find out a best match in relation to a correlation factor.

According to another embodiment, the two routes are established one after another and the correlation factor is calculated during route establishment of the later established route. Because of the parallelism of route establishment and calculation the correlation factor, the two parallel routes being correlation free to each other can be determined very quick.

According to a further embodiment, the correlation factor is related to a distance between the two routes, wherein the distance between the two routes is computed by calculating the distance between every intermediate node of one of the two routes to the other of the two routes, and wherein the distance is the number of intermediate hops on the shortest path between this node to the other route.

It further is useful, when the number k of hops is arbitrary fixed. In a preferred embodiment k is set to at least four to be sure that the two established parallel routes are correlation free to each other.

According to a further embodiment, for a given first route of the two routes the correlation factor is calculated for another of second routes, and wherein this second route is chosen to be the other of the two routes which comprises the lowest correlation factor. This embodiment enables determining the best match in relation to the correlation factor of two parallel routes.

According to a further embodiment the information element about a route further comprises
- information being necessary to identify the route of a connection, especially an identifier of the source node, an identifier of the destination node, a service class and a route number,
- a value for the distance of the respective route to a forwarding node,
- a flag which indicates whether the route is currently established or deleted.

Preferably, the information element about a route contains the whole information which is necessary to identify a route of a connection plus the value for the distance of the respective route to the information forwarder plus a flag which tells whether the route is currently established or deleted.

As mentioned above, according to a preferred embodiment the network control message is a MSH-NCFG message in the control subframe of a 802.16 mesh TDMA frame. In the network a fixed amount of bandwidth may be allocated for each transmission in the control subframe.

In a further preferred embodiment a queue is assigned to each node containing the received and/or generated information elements about the routes. The intension of using a queue as a data structure is derived from the fact that it is expected that the whole bundle of information may not be included in one management message. With a queue it can be guaranteed that the information elements are retransmitted first which are not retransmitted as longest. Therefore, information elements are taken from the beginning of the queue and are enqueued again after transmission. The continuous repetition of the route propagation guarantees that new nodes get also informed about already established routes. If a node receives route information from a neighbour node the queue may be updated.

In a further preferred embodiment a continuous repetition of the route propagation is performed.

The invention further comprises a computer program product which is directly loadable into an internal memory of a digital computer, comprising software code portions for performing the steps of the preceding claims when said product is run on a computer. The computer program product may be in the form of a diskette, CD-ROM or in the form of a signal which is to be transmitted via a computer network. The transmission may be conducted wired or wireless.

According to the invention, a node in a wireless mesh network is proposed. The network comprises two parallel routes for data transmission and a number of nodes, each of the two parallel routes starting from a source node and ending at a destination node and having a number of respective intermediate nodes between the source node and the destination node. The node comprises
- a first means for propagating information about routes which go over this respective node,
- a second means for propagating information about routes which go over neighbourhood nodes being located in a maximum distance of k hops in relation to this respective node, and
- a third means for transmitting the propagated information as payload in an information element in a network control message to this neighbourhood nodes.

A node with the features described comprises the same advantages as set out above according to the method. In a preferred embodiment the node comprises further means for executing at least some of the steps of the method described.

Furthermore, according to the invention a wireless mesh network is disclosed which comprises at least one node according to the invention.

Further features and advantages of the invention will be described by reference to the accompanying figures.
- Fig. 1: shows an example for interference of two parallel routes where respective intermediate nodes are lo- cated in a distance of three hops,
- Fig. 2: shows a possible format of a network control mes- sage which is extended by an information element.

Before explaining the invention in detail definitions for terms which will be used in the description will be provided for better understanding:
Connection:
   A connection is definitely determined by
      A) with a 2-tuple of the identifiers for a source node and a destination node, or
      B) with a 3-tuple of the identifiers for the source node, the destination node and a service class.

These definitions can be used alternatively for the term connection. The utilization of a n-tuple implies that every element is in sequence. That means, the following connections (according to definition A)) are not identical: R₁=(X, Y), R₂=(Y, X). R₁ and R₂, respectively, represent a route with the number 1 and 2, respectively. The first parameter in the brackets depicts a source node. The second parameter within the brackets depicts the destination node. Generally, the route of a connection is identified by an additional element for the tuple which includes the route number.

### Parallel routes:

All routes existing for a connection between a specific source node and a specific destination node are parallel routes. An equivalent term to parallel route is backup route. A parallel route is identified by a tuple of identifiers which are necessary to distinct between routes of different connections. In this context, these are the identifiers of the source node, the destination node, the service class and the route number.

### Correlation:

The correlation between two parallel routes is a number. The number relates to the distance between both routes.

### Distance between two routes:

The determination of a distance of two routes is related to the distance between every node of one route to every other node on the other route.

### Distance of two nodes:

The distance of two nodes is the number of intermediate stations (nodes) on the shortest way between the respective nodes.

With the method of the invention two parallel routes for data transmission in a wireless mesh network are determined which are correlation free or at least have only a small correlation to each other. As well known to those skilled in the art a wireless mesh network comprises a number of nodes. According to the above stated definitions, each of the two parallel routes starts from a source node and ends at a destination node. Each of the two routes comprises a number of respective intermediate nodes between the source node and the destination node. To guarantee a small or no correlation the intermediate nodes of the two routes have to be disjoint.

To determine the distance between intermediate nodes of the two routes information between these nodes has to be exchanged. In order to consider the distance and the correlation to other parallel routes, respectively, during route establishment, information will be distributed in the mesh network proactively. As will be apparent from the following description the distribution of this information does not imply additional message overhead. Instead, this information is included as additional payload in management messages. Therefore, an increase in workload can be avoided.

This will be explained with reference to the standard IEEE 802.16 with mesh extension which may be used as underlying network technology running the mesh or ad-hoc network. Within this standard, there exist so-called network control messages which can be used to carry information about the routes. These messages are called MSH-NCFG and are transmitted on a regularly basis in a control subframe of the 802.16 mesh TDMA frame. In this subframe, distributed contention free scheduling guarantees reception of management messages by all nodes which are in the neighbourhood of a sending node. The advantage of utilizing this message is that it is already foreseen by the standard to add additional vendor specific information. Therefore, carrying additional data is possible without an increase in network load. The reason for this is that always a fixed amount of bandwidth is allocated for each transmission in the control subframe.

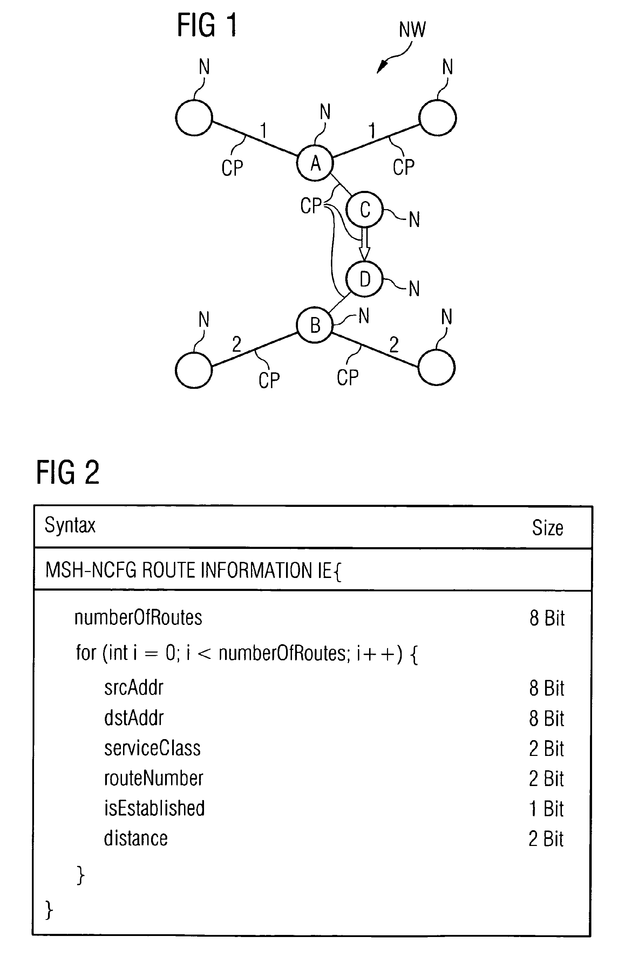

For determining two parallel routes being correlation free every node of the mesh network propagates information about all routes which go over him and all the information the node receives about routes which go over neighbourhood nodes being located in a maximum distance of k hops in relation to this respective node. The number k of hops is arbitrary, but fixed. In this application, for the parallel route's interference k=4 is enough. There can be a trade off between a likelihood of not-finding a satisfactory parallel route and a likelihood of interference by choosing a number which is smaller than 4. For example, there is a minimal chance that interference affects at the same time two parallel routes which are only three hops apart. This would be the case if interference is caused by a sender who is in the range of the first route and a receiver who is in the range of the second route. In this case, at least one node of the first route cannot receive through the transmission of the interfering node and at least one node of the second route cannot transmit because this node would interfere otherwise the reception of other communication. This situation is illustrated in Fig. 1.

Fig. 1 shows a mesh network NW having a number of nodes N. Between some of the nodes N there exist communication paths CP. Communication Paths CP depicted with "1" and the respective nodes N are part of a first route between a source node (not shown) and a destination node (not shown). Accordingly, communication paths CP depicted with "2" and the respective nodes N are part of route number 2. It is assumed that route number 1 and route number 2 are parallel routes, starting from the same source node and ending at the same destination node. As can be seen from Fig. 1 nodes N depicted with A and B have a distance of three hops in between, since node A is connected to node B via nodes C and D. As explained above, the interference can be caused by node C being a sender which is in the range of route number 1 and connected to node B which is a receiver and in the range of route number 2. In this case, at least one node (node A) of route number 1 cannot receive through the transmission of node C and at least one node (node B of route number 2) cannot transmit because he interferes with the reception of node D.

For propagating information about routes of a specific node information elements are used in the network control messages.

The information element about a route contains the whole information which is necessary to identify a route of a connection plus the value for the distance of the respective route to the information forwarder (sender) plus a flag which indicates whether the route is currently established or deleted. For example a route connection may be identified by the identifiers of the source node and the destination node, a service class to be guaranteed for the route, and the route number.

For propagation of route information the following steps are necessary:

### 1. Preparation of route information

Every node uses a queue which includes information elements about the routes. The information about the routes is either received by an own routing layer or by information messages for neighboured nodes. The intension of using a queue as data structure is to provide a possibility to spread information of an information element in more than one management message. With a queue it can be guaranteed that the information elements are retransmitted first which are not retransmitted as longest. Therefore, information elements are taken from the beginning of the queue and are enqueued again after transmission. Continuous repetition of the route propagation guarantees that new nodes get also informed about already established routes. Furthermore, if a node receives route information from neighboured nodes the queue of a respective node is updated. This can be done according to the following algorithm:
**procedure** *update Route Information* (*route, distance, established)*

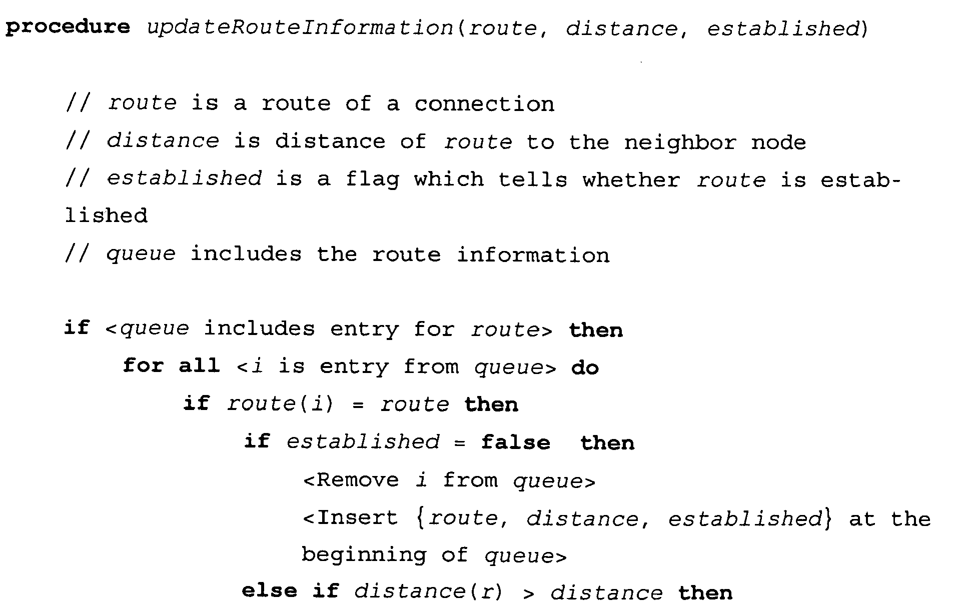

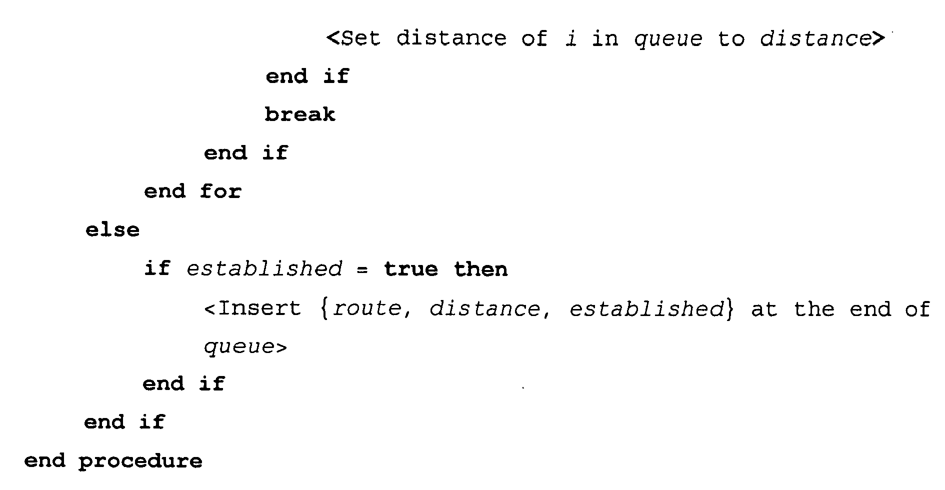

The fact that route status information can be distributed over multiple messages has the disadvantage that a route destroy can not be communicated by just omitting the relevant information in next messages. Therefore, route information elements include a flag which indicate whether the route is currently established or not. In case of a destroyed route, the flag is not set and the information element is not reenqueued if it is once taken out of the queue.

In an alternative embodiment, the information element might be enqueued for several times. In case a new node enters the mesh network the information about destroyed routes is not relevant for this respective node.

### 2. Transmission of the route information in MAC management messages

In IEEE 802.16 mesh networks the MSH-NCFG message is used for route status propagation. The message format is illustrated in Fig. 2. In this figure, the size of the information element for a respective variable is pointed out. "NumberOfRoute" indicates the route number. A possible size is 8 bit. "scrAddr" is the source address having a size of 8 bit. "dstAddr" is the destination address and has a size of 8 bit. The variable "serviceClass" is the service class and has a size of 2 bit. Furthermore, "routeNumber" is the number of the route and has a size of 2 bits. The flag whether a route is established or not is indicated by the variable "isEstablished" and has a size of 1 bit. "distance" is the number of hops from the source node until the destination node and has a size of 2 bits. The sequence of this variable can be arbitrary. Furthermore, the size of the respective variable might differ from the example. This message format can be extended by the above mentioned information elements. For route status propagation they are defined with variable length.

By propagating route status information it is possible to determine two parallel routes for data transmission in a wireless mesh network being correlation free to each other. The exact knowledge about routes in the network simplifies the establishment of the correlation free parallel routes. Correlation free parallel routes allow a better network performance in terms of throughput, delay and reliability. Determining the two parallel routes can be realized without an increase in network load by transmitting the above mentioned information elements within network control messages. In particular, the invention can be incorporated in IEEE 802.16 mesh networks with mesh extension. In this case, MSH-NCFG messages can be used for transporting information elements.

### References:

[AODVM] Zhenqiang Ye, Srikanth V. Krishnamurthy, sand Satish K. Tripathi. A Framework for reliable Routing in mobile Ad-Hoc-Networks. In INFOCOMM, 2003.
[AODVM/PD] Stephen Mueller, Dipak Ghosal. Analysis of a distributed Algorithm to determine multiple Routes with Path Diversity in Ad-Hoc Networks. In Modelling and Optimization in Mobile, Ad-Hoc, and Wireless Networks, pages 277-285, April 2005.

## Claims

1. A method for determining the distance between a route (1) and a node of a possible parallel route (2) for data transmission in a wireless mesh network with a number of nodes (N), each of the two parallel routes (1, 2) starting from a source node and ending at a destination node and having a number of respective disjoint intermediate nodes (A, B) between the source node and the destination node, wherein
- each node (N) of the mesh network propagates information about routes which go over this respective node,
- each node (N) of the mesh network propagates information about routes which go over neighbourhood nodes being located in a maximum distance of k hops in relation to this respective node,
- the propagated information of each node (N) is transmitted as payload in an information element in a network control message to his neighbourhood nodes for determining the distance of the node to the route.

2. The method according to claim 1, wherein a correlation factor of the two parallel routes (1, 2) is calculated.

3. The method according to claim 2, wherein the two routes (1, 2) are established one after another and the correlation factor is calculated during route establishment of the later established route.

4. The method according to claim 2 or 3, wherein the correlation factor is related to a distance between the two routes (1, 2), wherein the distance between the two routes (1, 2) is computed by calculating the distance between every intermediate node (A, B) of one of the two routes (1, 2) to the other of the two routes (2, 1), and wherein the distance is the number of intermediate hops on the shortest path between this node to the other route (2, 1).

5. The method according to one of the preceding claims, wherein the number k of hops is arbitrary fixed.

6. The method according to claim 5, wherein k is set to at least 4.

7. The method according to one of the preceding claims, wherein for a given first route (1) of the two routes the correlation factor is calculated for a number of second routes (2), and wherein this second route is chosen to be the other of the two routes which comprises the lowest correlation factor.

8. The method according to one of the preceding claims, wherein the information element about a route (1, 2) further comprises
- information being necessary to identify the route of a connection, especially an identifier of the source node, an identifier of the destination node, a service class and a route number,
- a value for the distance of the respective route to a forwarding node,
- a flag which indicates whether the route is currently established or deleted.

9. The method according to one of the preceding claims, wherein the network control message is a MSH-NCFG message in the control subframe of a 802.16 mesh TDMA frame.

10. The method according to claim 9, wherein in the network control message a fixed amount of bandwidth is allocated for each transmission in the control subframe.

11. The method according to one of the preceding claims, wherein a queue is assigned to each node containing the received and/or generated information elements about the routes.

12. The method according to claim 11, wherein an information element which is taken from the queue is enqueued after transmission again.

13. The method according to claim 11 or 12, wherein the queue of a node (N) is updated in case the node receives a new or updated route information from a neighbourhood node.

14. The method according to one of the preceding claims, wherein a continuous repetition of the route propagation is performed.

15. A computer program product directly loadable into an internal memory of a digital computer, comprising software code portions for performing the steps of the preceding claims when said product is run on a computer.

16. A node (N) in a wireless mesh network, the network having two parallel routes (1, 2) for data transmission and comprising a number of nodes (N), each of the two parallel routes (1, 2) starting from a source node and ending at a destination node and having a number of respective intermediate nodes (A, B) between the source node and the destination node,
the node comprising
- a first means for propagating information about routes (1, 2) which go over this respective node,
- a second means for propagating information about routes (1, 2) which go over neighbourhood nodes being located in a maximum distance of k hops in relation to this respective node, and
- a third means for transmitting the propagated information as payload in an information element in a network control message to his neighbourhood nodes.

17. The node according to claim 16, wherein it comprises further means for executing at least some of the steps of the one of the preceding claims 2 to 14.

18. A wireless mesh network, comprising at least one node (N) according to one of the claims 16 or 17.
